# EUROPÄISCHE PATENTSCHRIFT

(11) **EP 2 880 651 B1**
(45) Veröffentlichungstag und Bekanntmachung des Hinweises auf die Patenterteilung: **25.05.2016**
(21) Anmeldenummer: 13744476.6
(22) Anmeldetag: 24.07.2013
(51) Int. Cl.: G10L 15/22, B60R 16/037

(54) **VERFAHREN UND VORRICHTUNG ZUM BETREIBEN EINES SPRACHGESTEUERTEN INFORMATIONSSYSTEMS FÜR EIN FAHRZEUG**
METHOD AND DEVICE FOR OPERATING A SPEECH-CONTROLLED INFORMATION SYSTEM FOR A VEHICLE
PROCÉDÉ ET DISPOSITIF POUR EXPLOITER UN SYSTÈME INFORMATIQUE À COMMANDE VOCALE POUR UN VÉHICULE

(30) Priorität: 02.08.2012 DE 102012213668
(43) Veröffentlichungstag der Anmeldung: 10.06.2015
(73) Patentinhaber: Bayerische Motoren Werke Aktiengesellschaft, 80809 München (DE)
(72) Erfinder: HASLINGER, Andreas, 80939 Muenchen (DE)
(86) Internationale Anmeldenummer: PCT/EP2013/065560
(87) Internationale Veröffentlichungsnummer: WO 2014/019899

(56) Entgegenhaltungen:
- DE-A1- 2 714 621
- DE-A1-102007 042 583
- DE-A1-102012 022 630
- US-A1- 2008 254 746
- US-A1- 2009 164 216

## Beschreibung

Die Erfindung betrifft ein Verfahren und eine korrespondierende Vorrichtung zum Betreiben eines sprachgesteuerten Informationssystems für ein Fahrzeug.

Im Automobilbereich kommen in zunehmendem Maße sprachbasierte Benutzerschnittstellen zum Einsatz.

Ein Beispiel für solch eine sprachbasierte Benutzerschnittstelle in einem Fahrzeug ist z.B. in US 2009/0164216 A1 offenbart.

Neben Mobiltelefonen sind im Fahrzeug bisher im Wesentlichen Navigationsapplikationen kommerziell verfügbar, die mittels Sprachbedienung durch Eingabe von Orts- und/oder Straßennamen, bekannten Zielen und/oder Routen und/oder von Punkten von Interesse (POI) gesteuert werden.

Die Aufgabe, die der Erfindung zu Grunde liegt, ist es, ein Verfahren und eine Vorrichtung zum Betreiben eines sprachgesteuerten Informationssystems zu schaffen, die eine flexible Informationsabfrage ermöglichen und einen Beitrag leisten, eine Zuverlässigkeit der Informationsbereitstellung zu erhöhen.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich aus durch ein Verfahren und eine korrespondierende Vorrichtung zum Betreiben eines sprachgesteuerten Informationssystems für ein Fahrzeug. Es wird abhängig von einer sprachlichen Eingabe eines Fahrzeugnutzers zumindest ein Schlüsselwort ermittelt aus einer Menge an vorgegebenen Schlüsselwörtern. Abhängig von dem zumindest einen Schlüsselwort wird zumindest ein Ereignis und/oder zumindest ein Zustand aus einer Menge von während einer vorgegebenen Zeitdauer gespeicherten Ereignissen und/oder Zuständen des Fahrzeugs ermittelt, wobei das jeweilige Ereignis und/oder der jeweilige Zustand in Verbindung mit zumindest einem Bedingungseintritt gespeichert ist, der jeweils eine Bedingung charakterisiert, die erfüllt sein muss, damit das Ereignis eintritt und/oder der jeweilige Zustand besteht. Ferner wird eine Antwort ermittelt aus einer Menge von vorgegebenen Antworten abhängig von dem Bedingungseintritt, der dem ermittelten Ereignis und/oder Zustand zugeordnet ist. Des Weiteren wird ein Signalisierungssignal ermittelt abhängig von der ermittelten Antwort.

Vorteilhafterweise kann das Informationssystem so auch während einer Fahrt von einem Fahrzeugführer genutzt werden. Die sprachliche Interaktion mit dem Informationssystem hat den Vorteil, dass insbesondere ein Fahrzeugführer eine Beobachtung eines aktuellen Verkehrsgeschehens ungehindert fortsetzen kann. Vorteilhafterweise kann so auch ein aktueller Umgebungszustand und/oder ein aktueller Betriebszustand des Fahrzeugs bei der Auswahl der bereitzustellenden Information berücksichtigt werden. Durch Nutzung einer geeignet ausgebildeten Spracherkennung kann eine freie Sprache eines Fahrzeugnutzers ausreichend zuverlässig ausgewertet werden. Mögliche Problemstellungen, die den Fahrzeugnutzer betreffen, können abhängig von den Schlüsselwörtern und den Ereignissen einfach identifiziert werden. Dies ermöglicht ein effizientes und/oder zuverlässiges Auswählen und/oder Herausfiltern der voraussichtlich gewünschten Information für den Fahrzeugnutzer. Falsche oder kontextfreie Antworten können durch das Auswerten der Ereignis- und/oder Zustandshistorie reduziert oder sogar vermieden werden. Ferner kann die sprachliche Interaktion mit dem Fahrzeug einen Beitrag dazu leisten, dass eine Art persönliche Beziehung zu dem Fahrzeug entsteht und somit ein Wohlbefinden eines Fahrzeugnutzers bei Nutzung des Fahrzeugs gesteigert wird.

In einer vorteilhaften Ausgestaltung wird abhängig von dem zumindest einen Schlüsselwort ein Inhaltsabschnitt einer vorgegebenen interaktiven Bedienungsanleitung ermittelt und das Signalisierungssignal wird ermittelt abhängig von dem ermittelten Inhaltsabschnitt. Das Signalisierungssignal kann genutzt werden für eine Weiterleitung der Antwort an eine weitere Einrichtung und/oder an ein weiteres Modul zur Weiterverarbeitung. Vorteilhafterweise ermöglicht dies, eine interaktive Bedienungsanleitung des Fahrzeugs als Informationsquelle zu nutzen für die Informationsbereitstellung des Fahrzeugnutzers. Die Bedienungsanleitung kann sämtliche Fahrzeugkomponenten, wie zum Beispiel Motor, Getriebe, Sitzeinstellung, Radio, Navigationseinrichtung, umfassen oder nur spezifische Fahrzeugkomponenten, zum Beispiel solche Fahrzeugkomponenten, die ein Fahrzeugnutzer für eine persönliche Einstellung bedienen kann. Die Sprachsteuerung ermöglicht, dass der Fahrzeugnutzer seine Frage zum Fahrzeug aussprechen kann. Der oder die ermittelten Inhaltsabschnitte können akustisch ausgegeben werden. Ergänzend können Grafiken und/oder Bilder der Bedienungsanleitung optisch signalisiert werden.

In einer weiteren vorteilhaften Ausgestaltung wird die Antwort ermittelt abhängig von einer vorgegebenen charakteristischen Eigenschaft des Fahrzeugs, die das Fahrzeug eindeutig identifiziert. Dies ermöglicht eine individuelle Ausstattung des Fahrzeugs beim Ermitteln der Antwort zu berücksichtigen.

Insbesondere kann so auch eine Änderung der Ausstattung des Fahrzeugs berücksichtigt werden.

Ausführungsbeispiele der Erfindung sind im Folgenden anhand der schematischen Zeichnungen erläutert.

Es zeigen:
- Figur 1: ein schematisches Blockschaltbild eines sprachgesteuerten Informationssystems mit einer zugehörigen Steuereinheit und
- Figur 2: ein Zeitdiagramm.

Elemente gleicher Konstruktion oder Funktion sind figurenübergreifend mit den gleichen Bezugszeichen versehen.

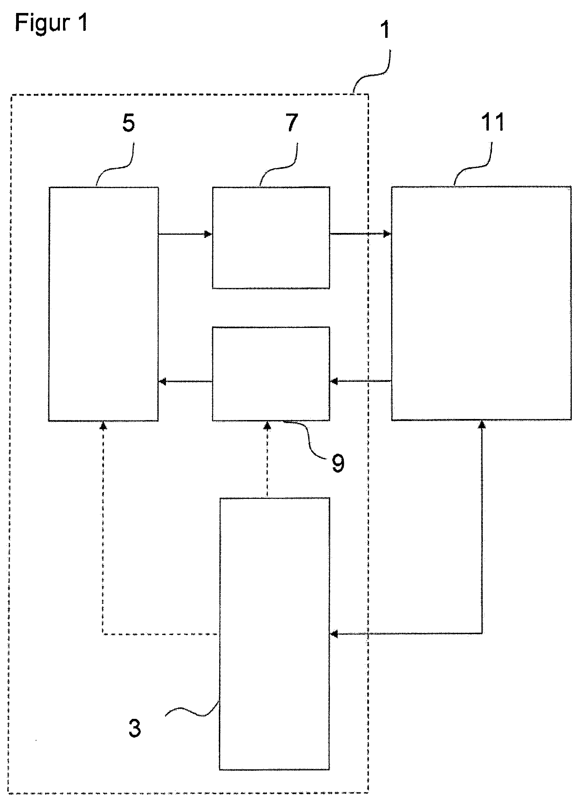

Figur 1 zeigt ein beispielhaftes schematisches Blockschaltbild für ein sprachgesteuertes Informationssystem 1 für ein Fahrzeug. Das sprachgesteuerte Informationssystem 1 umfasst beispielsweise eine Informationseinrichtung 3, eine Ein- und Ausgabeeinheit 5, eine Spracherkennungseinheit 7 und eine Sprachsyntheseeinheit 9. Ferner zeigt Figur 1 eine Steuereinheit 11, die auch als Vorrichtung zum Betreiben des sprachgesteuerten Informationssystems 1 bezeichnet werden kann. Die Steuereinheit 11 und/oder die Informationseinrichtung 3 und/oder die Spracherkennungseinheit 7 und/oder die Sprachsyntheseeinheit 9 können im Fahrzeug und/oder außerhalb des Fahrzeugs angeordnet sein.

Die Ein- und Ausgabeeinheit 5 umfasst beispielsweise ein Mikrofon und einen Lautsprecher und eine optische Anzeigvorrichtung, beispielsweise ein Display. Alternativ ist möglich, dass der Ein- und Ausgabeeinheit 5 eine optische Anzeigevorrichtung zugeordnet ist, beispielsweise ein zentrales Fahrzeugdisplay einer zentralen Recheneinheit des Fahrzeugs, auch Head-Unit genannt. Alternativ ist möglich, dass das sprachbasierte Informationssystem 1 mehrere weitere Ein- und/oder Ausgabeeinheiten aufweist oder dem sprachgesteuerten Informationssystem 1 mehrere weitere Ein- und/oder Ausgabeeinheiten zugeordnet sind. Beispielsweise kann vorgesehen sein, dass ein mobiles Endgerät, zum Beispiel ein Smartphone, als ein Ein- und/oder Ausgabeeinheit genutzt wird.

Die Ein- und Ausgabeeinheit 5 ist signaltechnisch gekoppelt mit der Spracherkennungseinheit 7. Die Spracherkennungseinheit 7 ist beispielsweise ausgebildet, eine sprachliche Eingabe eines Fahrzeugnutzers, beispielsweise eine Frage und/oder einen Sprachbefehl, zu erfassen und ein Wort und/oder eine Wortliste zu ermitteln, die die jeweilige sprachliche Eingabe repräsentieren. Die Spracherkennungseinheit 7 umfasst beispielsweise ein Spracherkennungsprogramm. Das Spracherkennungsprogramm ist beispielsweise ausgebildet, eine menschliche Spracheingabe, die analog oder digital erfasst wurde, auszuwerten.

Die Spracherkennungseinheit 7 kann beispielsweise auf einem Ganzwort-Sprachmodell basieren und/oder einem Phonembasierten Modell. Die Spracherkennungseinheit 7 ist beispielsweise ausgebildet, einzelne gesprochene Worte des Fahrzeugnutzers und/oder gesprochene Wortfolgen und/oder ganze Sätze auszuwerten und zu erkennen. Die Spracherkennungseinheit 7 kann sprecherunabhängig oder sprecherabhängig ausgebildet sein. Eine sprecherunabhängige Spracherkennungseinheit kann von einem oder mehreren Nutzern genutzt werden ohne Lern- und/oder Trainingsphase für die Spracherkennungseinheit 7. Die Spracherkennungseinheit 7 kann beispielsweise ein vordefiniertes Vokabular umfassen. Alternativ oder zusätzlich ist möglich, dass die Spracherkennungseinheit 7 ausgebildet ist, abhängig von einem fahrzeugnutzergenutzten Wortschatz das Vokabular anzupassen und/oder zu erweitern.

Beispielsweise können bisher unbekannte Wörter abgespeichert und ausgewertet werden. Die ausgewerteten, bisher unbekannten, Wörter können beispielsweise in ein nutzerspezifisches Wörterbuch aufgenommen werden.

Die Steuereinheit 11 ist beispielsweise signaltechnisch gekoppelt mit der Spracherkennungseinheit 7. Die Steuereinheit 11 ist ausgebildet, abhängig von der sprachlichen Eingabe eines Fahrzeugnutzers zumindest ein Schlüsselwort zu ermitteln aus einer Menge an vorgegebenen Schlüsselwörtern. Die Steuereinheit 11 ist beispielsweise ausgebildet, abhängig von der sprachlichen Eingabe des Fahrzeugnutzers vorgegebene Schlüsselworte zu detektieren. Die Spracherkennungseinheit 7 ist hierzu beispielsweise ausgebildet, das ermittelte Wort oder die Wortliste, die die sprachliche Eingabe des Fahrzeugnutzers repräsentiert, an die Steuereinheit 11 weiterzuleiten, die dann von der Steuereinheit 11 ausgewertet wird.

Für die Nutzung der sprachgesteuerten Eingabe durch einen Fahrzeugnutzer kann beispielsweise eine Aktivierung der Spracherkennungseinheit 7 und/oder der Sprachsyntheseeinheit, zum Beispiels durch den Fahrzeugnutzer, vorgesehen sein. Beispielsweise kann der Fahrzeugnutzer eine Spracheingabetaste zur Aktivierung der Spracherkennungseinheit 7 und/oder der Sprachsyntheseeinheit 9 betätigten. Die Spracheingabetaste kann beispielsweise an einem Lenkrad und/oder an einem Bedienelement angeordnet sein, wobei das Bedienelement vorzugsweise derart angeordnet ist, dass es für den Fahrzeugführer erreichbar ist. Das Bedienelement kann zum Beispiel in einer Mittelkonsole des Fahrzeugs angeordnet sein. Alternativ oder zusätzlich ist möglich, dass die Spracherkennungseinheit 7 und/oder der Sprachsyntheseeinheit 9 ausgebildet sind, dass sie mittels eines weiteren Sprachbefehls aktivierbar sind.

Die Steuereinheit 11 kann beispielsweise eine oder mehrere Datenbanken aufweisen, in der die vorgegebenen Schlüsselwörter gespeichert sind. Alternativ ist möglich, dass der Steuereinheit 11 die Datenbank und/oder zumindest eine weitere Datenbank zugeordnet ist, in der die vorgegebenen Schlüsselwörter gespeichert sind.

Die Steuereinheit 11 ist ferner ausgebildet, abhängig von dem zumindest einen Schlüsselwort zumindest ein zugehöriges Ereignis und/oder zumindest einen zugehörigen Zustand aus einer Menge von während einer vorgegebenen Zeitdauer T gespeicherten Ereignissen und/oder Zuständen zu ermitteln. Die Steuereinheit 11 ist hierzu beispielsweise signaltechnisch mit der Informationseineinrichtung gekoppelt.

Beispielsweise ist jeweils zumindest einem der vorgegebenen Schlüsselwörter zumindest ein vorgegebenes Ereignis und/oder ein vorgegebener Zustand zugeordnet. Die Informationseinrichtung 3 ist ausgebildet, die vorgegebenen Ereignisse und/oder die vorgegebene Zustände des Fahrzeugs zu detektieren und die vorgegebenen Ereignisse und/oder die vorgegebene Zustände, die während der vorgegebenen Zeitdauer T im Fahrzeug eintreten beziehungsweise bestehen, zu speichern. Hierbei wird das jeweilige Ereignis und/oder der jeweilige Zustand in Verbindung mit zumindest einem Bedingungseintritt gespeichert, der jeweils eine Bedingung charakterisiert, die erfüllt sein muss, dass das Ereignis eintritt und/oder der jeweilige Zustand besteht. Vorteilhafterweise ermöglicht dies, zu erkennen, auf Basis welcher Bedingung das jeweilige Ereignis eintrat und/oder der jeweilige Zustand bestand. Die Informationseinrichtung 3 kann hierzu beispielsweise ein Steuergerät umfassen.

Die Steuereinheit 11 ist ausgebildet, eine Antwort zu ermitteln aus einer Menge von vorgegebenen Antworten abhängig von dem Bedingungseintritt, der dem ermittelten Ereignis und/oder Zustand zugeordnet ist.

Die vorgegebenen Antworten sowie die Zuordnung der Antworten zu den jeweiligen Bedingungseintritten können beispielsweise in der Datenbank und/oder in einer ergänzenden Datenbank gespeichert sein.

Hierbei kann vorgesehen sein, dass für das Ermitteln der Antwort eine vorgegebene charakteristische Eigenschaft berücksichtigt wird, die das Fahrzeug eindeutig identifiziert, beispielsweise eine Fahrgestellnummer. So kann eine individuelle Ausstattung des Fahrzeugs beim Ermitteln der Antwort berücksichtigt werden. Insbesondere kann so auch eine Änderung der Ausstattung des Fahrzeugs berücksichtigt werden.

Die Datenbank und/oder die ergänzende Datenbank, in denen die Schlüsselwörter und/oder die jeweiligen Antworten und/oder die Zuordnungen der Antworten zu den jeweiligen Bedingungseintritten gespeichert sind, können beispielsweise als mobile Datenträger ausgebildet sein. Die Datenbank oder Datenbanken können derart ausgebildet sein, dass sie erweiterbar und/oder aktualisierbar sind, zum Beispiel nutzerspezifisch erweiterbar und/oder aktualisierbar. Es können auch bereits zwischen dem jeweiligen Fahrzeugnutzer und dem Fahrzeug geführte Dialoge, also die sprachliche Eingabe und die zugehörige ausgegebene Antwort, in der Datenbank gespeichert werden. Insbesondere können solche Dialoge über vorgegebene Kommunikationsverbindungen an ein Backend-System eines Fahrzeugherstellers übermittelt werden. Insbesondere im Falle, dass die Antworten nicht zufriedenstellend für den Fahrzeugnutzer sind, kann diese Fragestellung an den Fahrzeughersteller weitergeleitet werden.

Die Informationseinrichtung 3 kann ferner beispielsweise eine interaktive Bedienungsanleitung für das Fahrzeug umfassen, wobei vorgegebenen Inhaltsabschnitten der Bedienungsanleitung jeweils zumindest eines der Schlüsselwörter zugeordnet ist.

Die vorgegebenen Antworten können beispielsweise eine oder mehrere der Inhaltsabschnitte der Bedienungsanleitung umfassen. In der Datenbank kann hierzu beispielsweise eine Verweisung auf den jeweiligen Inhaltsabschnitt umfassen, der dann von der Informationseinheit bereitgestellt wird.

Hierbei kann ebenfalls vorgesehen sein, dass für das Ermitteln der Antwort die vorgegebene charakteristische Eigenschaft berücksichtigt wird. So kann eine aktuelle individuelle, auch geänderte, Ausstattung des Fahrzeugs beim Ermitteln des Inhaltsabschnitts berücksichtigt werden.

Die Steuereinheit 11 kann ausgebildet sein, abhängig von dem zumindest einen Schlüsselwort einen Inhaltsabschnitt der interaktiven Bedienungsanleitung zu ermitteln und das Signalisierungssignal abhängig von dem Inhaltsabschnitt zu ermitteln.

Beispielsweise kann, falls für das oder die ermittelten Schlüsselwörter kein zugehöriges Ereignis und/oder kein zugehöriger Zustand in der Menge von gespeicherten Ereignissen und/oder Zuständen ermittelt werden kann, abhängig von dem zumindest einen ermittelten Schlüsselwort der Inhaltsabschnitt der Bedienungsanleitung ermittelt werden.

Die vorgegebenen Antworten und/oder die Inhaltsabschnitte der Bedienungsanleitung können ein Textformat und/oder ein Grafikformat und/oder ein weiteres spezifisches Datenformat, beispielsweise ein Audioformat, aufweisen. Für eine Ausgabe der ermittelten Antwort und/oder des Inhaltsabschnitts kann die Sprachsyntheseeinheit 9 genutzt werden, insbesondere für Teile, die ein textuelles Datenformat aufweisen.

Die Sprachsyntheseeinheit 9 ist beispielsweise ausgebildet, ein Signal zu ermitteln zur akustischen Signalisierung der Antwort und/oder des Inhaltsabschnitts. Die vorgegebenen Antworten und/oder die Inhaltsabschnitte der Bedienungsanleitung können beispielsweise textuell vorliegen. Die Sprachsyntheseeinheit 9 kann daher ausgebildet sein, einen Fließtext in ein Signal umzuwandeln, das geeignet ist, eine akustische Signalisierungsvorrichtung derart anzusteuern, zum Beispiel den Lautsprecher der Ein- und Ausgabeeinheit 5, dass diese ein akustisches Signal ausgibt, das den Fließtext repräsentiert.

Alternativ oder zusätzlich ist möglich, dass die Ausgabeeinheit für eine Signalisierung der ermittelten Antwort und/oder des Inhaltsabschnitts genutzt wird.

Vorzugsweise kann die optische Anzeigevorrichtung genutzt werden für eine Signalisierung von Teilen, die das Grafikformat aufweisen und der Lautsprecher für Teile, die ein Audioformat aufweisen.

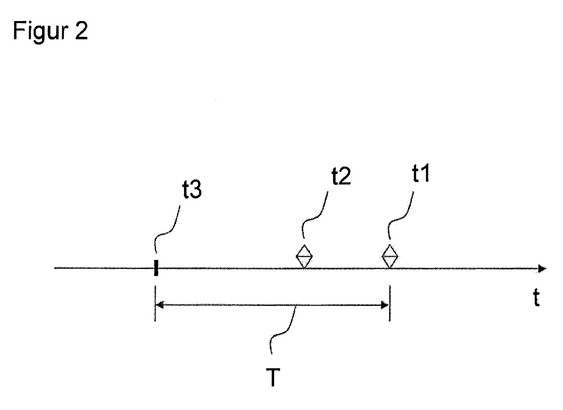

Figur 2 zeigt ein Zeitdiagramm zur Veranschaulichung eines zeitlichen Bezugs der sprachlichen Eingabe, beispielsweise einer Frage des Fahrzeugnutzers und einer Ereignis- und/oder Zustandshistorie für das Fahrzeug. Hierbei charakterisiert t1 einen ersten Zeitpunkt, zu dem der Fahrzeugnutzer die Spracherkennungseinheit 7 und/oder die Sprachsyntheseeinheit 9 aktiviert.

Ein zweiter Zeitpunkt t2 charakterisiert einen Zeitpunkt, zu dem das eigentliche Ereignis erkannt wurde. Ein dritter Zeitpunkt t3 charakterisiert einen Beginn der Zeitdauer T, während der die vorgegebenen jeweiligen Ereignisse und/oder Zustände erfasst wurden.

Tritt beispielsweise ein unerwartetes Ereignis im Fahrzeug auf, das ein Fahrzeugnutzer nicht erwartet und/oder das für den Fahrzeugnutzer neu ist, ist es sehr wahrscheinlich, dass der Fahrzeugnutzer in diesem Augenblick oder mit nur geringem zeitlichen Versatz Informationen zu dem Ereignis haben möchte und eine entsprechende sprachliche Eingabe tätigt, zum Beispiel eine Frage stellt, die das Ereignis betrifft. In diesem Fall ist daher eine Wahrscheinlichkeit hoch, dass die sprachliche Eingabe korreliert ist mit einem zeitlich, insbesondere kurzzeitig, zuvor erfassten und gespeicherten Ereignis.

Beispielsweise ein Fahrzeugnutzer stellt fest, dass ein Motor des Fahrzeugs, das eine Start-Stop-Funktion aufweist, trotz dieser Start-Stop-Funktion beim Anhalten an einer Ampel nicht ausgeht. In diesem Falle könnte der Fahrzeugnutzer das sprachgesteuerte Informationssystem 1 aktiveren und eine Frage stellen, die lautet: "Warum geht der Motor nicht aus?"

Beispielsweise könnten hierbei folgende Schlüsselwörter ermittelt werden:
- Motor
- geht aus
- nicht.

Abhängig von diesen Schlüsselwörtern kann beispielsweise das von der Informationseinrichtung 3 erfasste Ereignis, dass der Motor nicht ausgeschaltet wurde, als das Fahrzeug länger als eine vorgegebene minimale Stehzeit gestanden ist, ermittelt werden. Insbesondere kann das Ereignis in Verbindung mit zumindest einem Bedingungseintritt gespeichert worden sein, dass der Motor abgeschaltet wird, wenn eine erfasste Außentemperatur größer als +3 °C ist, diese Bedingung jedoch nicht erfüllt war.

Eine mögliche Antwort auf die Frage des Fahrzeugnutzers kann lauten: "Der Motor geht nicht aus, da der aktuelle Außentemperaturwert unter dem Sollwert von +3 °C liegt."

Ferner ist möglich, dass die Antwort eine Kombination von mehr als einem Bedingungseintritt charakterisiert. Zum Beispiel kann die Start-Stop-Funktion neben der Außentemperatur auch abhängen von einem aktuellen Ladezustand einer Fahrzeugbatterie.

Eine mögliche Antwort auf die Frage des Fahrzeugnutzers kann in diesem Fall lauten: "Der Motor geht nicht aus, da der aktuelle Außentemperaturwert unter dem Sollwert von +3 °C liegt und die Fahrzeugbatterie keine ausreichende Ladekapazität aufweist."

In einem weiteren Beispielfall stellt der Fahrzeugnutzer beispielsweise fest, dass ein Scheibenwischer des Fahrzeugs automatisch anfängt zu wischen. In diesem Falle könnte der Fahrzeugnutzer das sprachgesteuerte Informationssystem 1 aktiveren und eine Frage stellen, die lautet: "Warum schaltet sich der Scheibenwischer ein?"

Beispielsweise könnten hierbei folgende Schlüsselwörter ermittelt werden:
- Scheibenwischer
- ein.

Abhängig von diesen Schlüsselwörtern kann beispielsweise das von der Informationseinrichtung 3 erfasste Ereignis, dass der Scheibenwischer aktiviert wurde, ermittelt werden. Insbesondere kann das Ereignis in Verbindung mit zumindest dem einen Bedingungseintritt gespeichert worden sein, dass der Regensensor Wasser auf der Windschutzscheibe ermittelt hat.

Eine mögliche Antwort auf die Frage des Fahrzeugnutzers kann lauten: "Der Scheibenwischer wurde aktiviert, da der Regensensor signalisiert hat, dass es regnet."

### Bezugszeichenliste

- 1: sprachgesteuertes Informationssystem
- 3: Informationseinrichtung
- 5: Ein- und Ausgabeeinheit
- 7: Spracherkennungseinheit
- 9: Sprachsyntheseeinheit
- 11: Steuereinheit

- t1: erster Zeitpunkt
- t2: zweiter Zeitpunkt
- t3: dritter Zeitpunkt
- T: Zeitdauer

## Patentansprüche

1. Verfahren zum Betreiben eines sprachgesteuerten Informationssystems (1) für ein Fahrzeug, bei dem
- abhängig von einer sprachlichen Eingabe eines Fahrzeugnutzers zumindest ein Schlüsselwort ermittelt wird aus einer Menge an vorgegebenen Schlüsselwörtern,
- abhängig von dem zumindest einen Schlüsselwort zumindest ein Ereignis und/oder zumindest ein Zustand ermittelt wird aus einer Menge von während einer vorgegebenen Zeitdauer (T) gespeicherten Ereignissen und/oder Zuständen des Fahrzeugs, wobei das jeweilige Ereignis und/oder der jeweilige Zustand in Verbindung mit zumindest einem Bedingungseintritt gespeichert ist, der jeweils eine Bedingung charakterisiert, die erfüllt sein muss, damit das Ereignis eintritt und/oder der jeweilige Zustand besteht,
- eine Antwort ermittelt wird aus einer Menge von vorgegebenen Antworten abhängig von dem Bedingungseintritt, der dem ermittelten Ereignis und/oder Zustand zugeordnet ist, und
- ein Signalisierungssignal ermittelt wird abhängig von der Antwort.

2. Verfahren nach Anspruch 1,
bei dem abhängig von dem zumindest einen Schlüsselwort ein Inhaltsabschnitt einer vorgegebenen interaktiven Bedienungsanleitung ermittelt wird und das Signalisierungssignal ermittelt wird abhängig von dem Inhaltsabschnitt.

3. Verfahren nach Anspruch 1 oder 2,
bei dem die Antwort ermittelt wird abhängig von einer vorgegebenen charakteristischen Eigenschaft des Fahrzeugs, die das Fahrzeug eindeutig identifiziert.

4. Vorrichtung zum Betreiben eines sprachgesteuerten Informationssystems (1), die ausgebildet ist das Verfahren nach einem der Ansprüche 1 bis 3 auszuführen.

## Claims

1. A method for operating a voice-controlled information system (1) for a vehicle, wherein
- subject to a verbal input by a user of a vehicle, at least one keyword is determined from a set of predetermined keywords,
- subject to the at least one keyword, at least one event and/or at least one state is determined from a set of events and/or states of the vehicle which are stored during a predetermined period of time (T), the respective event and/or the respective state being stored in conjunction with at least one condition occurrence which characterises a respective condition which must be met in order for the event to happen and/or for the respective state to exist,
- a response is determined from a set of predetermined responses subject to the condition occurrence which is associated with the determined event and/or state, and
- an indication signal is determined subject to the response.

2. A method according to claim 1, wherein subject to the at least one keyword, the content portion of a predetermined interactive operating manual is determined and the indication signal is determined subject to the content portion.

3. A method according to claim 1 or claim 2, wherein the response is determined subject to a predetermined characteristic property of the vehicle which clearly identifies the vehicle.

4. A device for operating a voice-controlled information system (1) which is configured to implement the method according to any one of claims 1 to 3.

## Revendications

1. Procédé de gestion d'un système d'information à commande vocale (1) destiné à un véhicule selon lequel :
- en fonction d'une entrée vocale d'un utilisateur du véhicule au moins un mot clef est déterminé à partir d'un ensemble de mots clefs prédéfinis,
- en fonction de ce ou de ces mot(s)-clef(s) au moins un évènement et/ou au moins un état est déterminé à partir d'un ensemble d'événements et/ou d'états du véhicule enregistrés pendant une durée (T) prédéfinie, chaque événement et/ou chaque état étant enregistré en liaison avec au moins une entrée de condition qui caractérise respectivement une condition qui doit être remplie pour que l'événement se produise et/ou que l'état respectif existe,
- une réponse est déterminée à partir d'un ensemble de réponses prédéfinies en fonction de l'entrée de la condition qui est associée à l'événement et/ou à l'état déterminé, et
- un signal de signalisation est déterminé en fonction de la réponse.

2. Procédé conforme à la revendication 1,
selon lequel en fonction du ou des mot(s)-clef(s), une partie du contenu d'instructions de conduite interactives prédéfinies est déterminée, et le signal de signalisation est déterminé en fonction de la partie contenu.

3. Procédé conforme à la revendication 1 ou 2,
selon lequel la réponse est déterminée en fonction d'une propriété caractéristique prédéfinie du véhicule qui identifie incontestablement ce véhicule.

4. Procédé de gestion d'un système d'information à commande vocale (1) qui est réalisé pour permettre la mise en oeuvre du procédé conforme à l'une des revendications 1 à 3.
